Europäisches Patentamt

**European Patent Office**

**Office européen des brevets**

(19)

(11) Numéro de publication : **0 034 514 B1**

(12) **FASCICULE DE BREVET EUROPÉEN**

(45) Date de publication du fascicule du brevet :
09.03.83

(21) Numéro de dépôt : **81400127.7**

(22) Date de dépôt : **28.01.81**

(51) Int. Cl.³ : **H 04 Q 11/04, H 04 M 11/06**

(54) **Installation de commutation numérique à division du temps pour des lignes véhiculant la parole et des paquets de données.**

(30) Priorité : **13.02.80 FR 8003181**

(43) Date de publication de la demande :
**26.08.81 Bulletin 81/34**

(45) Mention de la délivrance du brevet :
**09.03.83 Bulletin 83/10**

(84) Etats contractants désignés :
**DE GB NL SE**

(56) Documents cités :
**FR A 2 412 994**

**IEEE TRANSACTIONS ON COMMUNICATIONS, vol. COM-27, no. 7, juillet 1979 New York US TORU TSUDA et al. : « An Approach to Multi-Service Subscriber Loop System Using Packetized Voice/Data Terminals », pages 1112-1117.**

**CONFERENCE RECORD. 1978 INTERNATIONAL CONFERENCE ON COMMUNICATIONS vol. 2, 4-7 juin 1978 New York US RUDIN : « Studies of the integration of circuit and packet switching » pages 20.2.1 - 20.2.7.**

(73) Titulaire : **Dauphin, Jean-Louis**
**70, Résidence Corlay**
**F-22300 Lannion (FR)**

**Louvet, Olivier**
**22, Avenue de Normandie Keruhel**
**F-22300 Lannion (FR) .**

**Pitie, Jean-Marc**
**6, Résidence Corlay**
**F-22300 Lannion (FR)**

(72) Inventeur : **Dauphin, Jean-Louis**
**70, Résidence Corlay**
**F-22300 Lannion (FR)**
Inventeur : **Louvet, Olivier**
**22, Avenue de Normandie Keruhel**
**F-22300 Lannion (FR)**
Inventeur : **Pitie, Jean-Marc**
**6, Résidence Corlay**
**F-22300 Lannion (FR)**

(74) Mandataire : **Cabinet Martinet**
**62, rue des Mathurins**
**F-75008 Paris (FR)**

# Installation de commutation numérique à division du temps pour des lignes véhiculant la parole et des paquets de données

La présente invention concerne une installation de commutation numérique à division du temps pour des lignes véhiculant la parole et des paquets de données, commutation, d'une part, entre des premiers canaux numériques en mode-circuit MIC, qui sont chacun multiplexés avec un second canal numérique en mode-paquet dans une première ligne bidirectionnelle à un premier débit prédéterminé, et des secondes lignes numériques bidirectionnelles en mode-circuit MIC et, d'autre part, entre lesdits seconds canaux et des troisièmes et quatrièmes lignes numériques bidirectionnelles en mode paquet, lesdits canaux et lesdites secondes, troisièmes et quatrièmes lignes ayant un second débit moitié du premier débit. L'installation comprend des premiers moyens pour démultiplexer lesdites premières lignes numériques en des premiers et seconds canaux numériques entrants, et des premiers moyens pour multiplexer les premiers et seconds canaux sortants en lesdites premières lignes numériques.

Des installations de ce type sont déjà connues dans l'art antérieur pour lesquelles les premières lignes numériques transitant à la fois la parole et des paquets de données sont des lignes d'abonné.

Dans l'installation décrite dans la FR-A 2.412.994, une ligne d'abonné bifilaire est interconnectée entre deux équipements de multiplexage et de démultiplexage. Chez l'abonné, l'équipement correspondant est relié à une pluralité de terminaux de données en mode-paquet, tels que des télécopieurs et une télé-imprimante, ainsi qu'à un poste téléphonique à travers un convertisseur analogique-numérique. A l'autre extrémité de la ligne d'abonné, le second équipement de multiplexage et de démultiplexage est relié bidirectionnellement, d'une part, à un central de données à travers une voie transitant les canaux de données en mode-paquet et, d'autre part, à un central téléphonique classique, notamment numérique, à travers une voie transitant uniquement la parole. Typiquement, une ligne d'abonné véhicule un canal affecté à la parole et deux canaux affectés aux paquets de données qui sont multiplexés, et la transmission s'effectue à l'alternat.

Le principal inconvénient d'une telle installation est que le central de données pour commutation de paquets doit comprendre un nombre d'équipements terminaux de données (E.T.D.) égal au nombre de lignes d'abonné ou égal au produit de ce nombre par le nombre de canal de données multiplexés dans une ligne d'abonné. Etant donné que l'occupation réelle de tels canaux de données est relativement réduite pour un abonné, il apparaît que le coût de rattachement d'un abonné à une telle installation est onéreux du fait de l'affectation bijective des équipements E.T.D. par rapport aux canaux en mode-paquet.

En outre, l'installation selon la FR-A 2.412.944 sépare complètement la commutation de paquets et la commutation des signaux numériques de parole. Ceci implique que le central de données en mode-paquet doit être situé au même endroit que le central téléphonique classique. En fait, eu égard au nombre prévisible restreint d'abonnés disposant d'équipements terminaux de données, le commutateur de paquets est généralement éloigné du central téléphonique de rattachement de l'abonné, celui-ci devant alors recevoir par une artère numérisée à travers le réseau commuté les paquets afin de réduire les frais d'infrastructure des liaisons d'abonné aux réseaux de transmission par paquets.

La présente invention a donc pour but de fournir une installation de commutation numérique du genre décrite dans l'entrée en matière dans laquelle la commutation en mode-circuit, c'est-à-dire des canaux de parole numérisés, ainsi que la commutation en mode-paquet, c'est-à-dire des canaux de données, s'effectuent à travers un réseau de commutation numérique classique de rattachement d'abonnés, moyennant quelques modifications internes de celui-ci.

A cette fin, une installation de commutation numérique à division du temps pour des lignes véhiculant la parole et des paquets de données est caractérisée en ce qu'elle comprend :

— des seconds moyens pour multiplexer lesdits premiers et seconds canaux entrants et les secondes, troisièmes et quatrièmes lignes entrantes en un multiplex numérique ayant un troisième débit prédéterminé ;

— des moyens recevant ledit multiplex pour commuter bidirectionnellement le premier canal de chaque première ligne au premier canal d'une autre première ligne ou à une seconde ligne, le second canal de chaque première ligne à une quatrième ligne et chaque troisième ligne à une quatrième ligne ;

— des seconds moyens pour démultiplexer le multiplex numérique à un troisième débit, résultant des commutations dans lesdits moyens de commutation, en les premiers et seconds canaux sortants et les secondes, troisièmes et quatrièmes lignes sortantes.

Conformément à l'invention, le nombre de premières lignes dites d'abonné est supérieur au nombre de quatrièmes lignes en mode-paquet qui sont destinées à relier l'installation de commutation numérique à division du temps à un commutateur de paquets qui a accès à un réseau de transmission de données par paquets. Cette disposition réduit considérablement le coût de rattachement d'un abonné à réseau de transmission par paquets.

Selon l'invention, les troisièmes lignes, en mode-paquet, sont destinées à relier l'installation de commutation numérique aux réseaux extérieurs, tels que le réseau téléphonique commuté ou le réseau télex, par l'intermédiaire d'une adaptation adéquate offrant la possibilité de transmettre des données sur ces réseaux extérieurs.

La fonction essentielle de l'installation selon l'invention est de distinguer dans les premières lignes les premiers canaux destinés à la parole et les seconds canaux destinés aux paquets de données.

Dès que l'installation a détecté une absence de fanions qui sont normalement émis sur un second canal (ou sur une troisième ligne) entre les paquets, il cherche une quatrième ligne libre afin d'établir une liaison bidirectionnelle entre l'E.T.D. de l'abonné (ou du dispositif d'adaptation aux réseaux extérieurs) correspondant et l'E.T.D. du commutateur de paquets relié à la quatrième ligne. Inversement, le commutateur de paquets transmet à l'installation selon l'invention un signal d'ordre pour établir une liaison bidirectionnelle entre une quatrième ligne et un second canal (ou entre une quatrième ligne et une troisième ligne) dès que l'organe de gestion du commutateur de paquets a été, d'une part informé de l'acheminement d'un message vers ledit second canal (ou vers ladite troisième ligne) et, d'autre part, a sélectionné un E.T.D. libre du commutateur de paquets. L'installation selon l'invention procède à de véritables expansion et compression de l'information en paquets respectivement suivant la direction quatrièmes lignes vers seconds canaux (ou vers troisièmes lignes) et suivant la direction inverse.

En outre, l'invention prévoit que l'installation émet des fanions sur les seconds canaux des premières lignes sortantes et sur les troisièmes et quatrièmes lignes sortantes, dirigées respectivement vers les abonnés, le dispositif d'adaptation aux réseaux extérieurs et le commutateur de paquets, après chaque déconnexion d'un second canal, d'une troisième ou quatrième ligne, afin de ne pas interrompre la procédure normale d'échange de paquets.

L'invention sera mieux comprise à la lecture de la description qui suit d'un exemple préféré de réalisation et à l'examen des dessins annexés correspondants, dans lesquels :

la Figure 1 est un bloc-diagramme schématique d'une installation de commutation numérique à division du temps conforme à l'invention ;

la Figure 2 représente en détail les blocs fonctionnels d'un équipement individuel relié à une première ligne à deux canaux en mode-paquet et en mode-circuit ;

la Figure 3 représente en détail les blocs fonctionnels d'un équipement individuel pour paquets relié à une troisième ligne donnant accès au dispositif d'adaptation aux réseaux extérieurs ; et

la Figure 4 représente en détail les blocs fonctionnels d'un équipement individuel pour paquets relié à une quatrième ligne donnant accès au commutateur de paquets, identique selon une caractéristique de l'invention à un équipement individuel pour la parole relié à une troisième ligne donnant accès au dispositif d'adaptation.

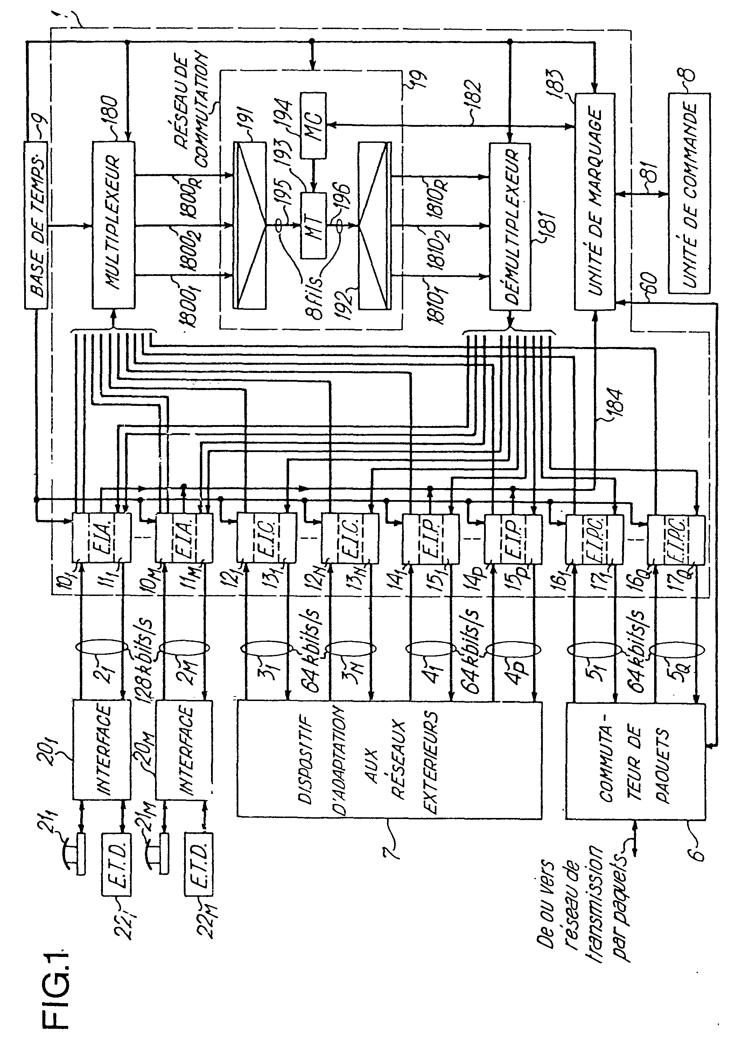

L'environnement de l'installation de commutation à division du temps 1 conforme à l'invention est illustré à la Fig. 1. Les liaisons numériques bidirectionnelles au système 1 sont classiques et sont par exemple des lignes à paires de câbles coaxiaux symétrisés fonctionnant en mode duplex. Elles sont de deux types. Un premier type concerne des premières lignes numériques bidirectionnelles $2_1$ à $2_M$ ayant un premier débit prédéterminé égal à 128 kbit/s. Un second type concerne des secondes, troisièmes et quatrièmes lignes numériques bidirectionnelles $3_1$ à $3_N$, $4_1$ à $4_P$ et $5_1$ à $5_Q$ ayant un second débit égal à 64 kbit/s, c'est-à-dire à la moitié du premier débit. Les premières lignes $2_1$ à $2_M$ sont des lignes d'abonné. Elles convoient chacune un premier canal numérique en mode-circuit $IT_c$, et un seul canal numérique en mode-paquet $IT_p$, chacun au débit de 64 kbit/s. Du côté abonné, chaque première ligne $2_1$ à $2_M$ est reliée, à travers une interface $20_1$ à $20_M$ qui comporte un multiplexeur-démultiplexeur, d'une part au poste téléphonique de l'abonné $21_1$ à $21_M$ muni d'un dispositif de codage et décodage MIC monovoie associé au canal en mode-circuit $IT_c$ à 64 kbit/s et, d'autre part, à un équipement terminal de données d'abonné (E.T.D.) $22_1$ à $22_M$ assigné au canal en mode-paquet $IT_p$ à 64 kbit/s. Le premier canal en mode-circuit est du type MIC et propre à transmettre classiquement une voie de parole échantillonnée en des octets $IT_c$. Le second canal en mode paquet transmet des paquets dans des intervalles temporels ou octets $IT_p$. Comme il est connu, chaque E.T.D. d'abonné est relié à une pluralité de terminaux du genre télétype, télécopieur, imprimante, visiophone ou analogue et transmet et reçoit en temps partagé des messages assignés à chaque terminal. Les messages transmis par l'E.T.D. d'abonné 22 sont sous la forme d'un ou de plusieurs paquets informatifs qui sont acheminés à travers l'installation de commutation 1 vers un commutateur de paquets 6. Après analyse de l'en-tête de chaque paquet, le commutateur 6 réémet ce dernier paquet vers un second canal $IT_p$ d'une première ligne d'abonné 2, si le paquet est destiné à l'E.T.D. d'un abonné, ou vers une troisième ligne 4, si le paquet de données est destiné à être émis sur un réseau extérieur vers des abonnés distants, ou enfin vers le réseau de transmission de données par paquets.

Ainsi, sur une ligne téléphonique d'abonné $2_1$ à $2_M$ transite, d'une part un canal numérique téléphonique classique dit en mode-circuit à 64 kbit/s et, d'autre part, un canal numérique en mode-paquet à 64 kbit/s. L'installation de commutation 1 a pour fonction essentielle de distinguer ces deux types de canaux. Le premier canal $IT_c$ est commuté à l'une des secondes lignes numériques MIC de parole à 64 kbit/s classiques $3_1$ à $3_N$ du réseau téléphonique commuté vers le poste téléphonique d'un abonné distant ou directement au premier canal en mode-circuit $IT_c$ d'une ligne $2_1$ à $2_M$ d'un abonné local. Le second canal $IT_p$ est commuté, à travers des quatrièmes lignes numériques fonctionnant en mode-paquet à 64 kbit/s $5_1$ à $5_Q$, au commutateur de paquets 6 qui détermine les différents circuits virtuels à établir pour chacun des messages transitant sur le second canal $IT_p$. Ces circuits virtuels peuvent être établis à travers l'installation de commutation numérique 1 et le commutateur de paquets 6, soit entre deux abonnés locaux, soit entre un abonné local et un dispositif d'adaptation aux réseaux extérieurs 7. Ce dispositif 7 est illustré sur la Fig. 1 par un bloc unique relié, côté installation de commutation aux secondes lignes $3_1$ à $3_N$ et aux troisièmes lignes $4_1$ à $4_p$ à 64 kbit/s.

Avant de détailler le fonctionnement et la structure de l'installation de commutation 1, on rappelle certaines caractéristiques et définitions de la transmission en mode-paquet. A cet égard, on pourra se reporter pour de plus amples détails à l'avis X 25 du Comité Consultatif International Télégraphique et Téléphonique (C.C.I.T.T.), Tome VIII.2, Genève, en ce qui concerne la procédure d'accès à un équipement terminal de traitement de données.

De manière générale, le protocole standard d'accès à un réseau de transmission par paquets selon l'avis X 25 distingue les trois niveaux suivants :

1. Le niveau paquet est relatif à la gestion des circuits virtuels (multiplexage, établissement, libération, remise à zéro, etc...) ; chaque circuit virtuel est défini par la correspondance établie à travers un réseau de commutation en mode-paquets entre deux abonnés et assure la transmission bidirectionnelle de paquets avec maintien en séquence ; un circuit virtuel est caractérisé localement sur une liaison entre deux E.T.D. par une étiquette à l'en-tête du paquet qui est appelée numéro de voie logique.

2. Le niveau trame est relatif à la gestion des échanges de données entre deux E.T.D., par exemple entre un E.T.D. d'abonné et un E.T.D. du commutateur de paquets 6 ; ce niveau trame est défini par la procédure connue sous le sigle HDLC (de l'américain « High Data Link Control ») et dite de commande de chaînon à haut niveau définie par l'Organisation Internationale de Normalisation (ISO) ; le niveau trame est un cas particulier de la procédure HDLC lorsque la liaison est du type point à point.

3. Le niveau physique est relatif aux caractéristiques de transmission de la liaison entre l'E.T.D. d'abonné 22 et le commutateur de paquets 6, c'est-à-dire principalement celles des lignes correspondantes $2_1$ à $2_M$ et $5_1$ à $5_Q$ et de l'installation de commutation numérique 1.

La présente invention ne s'intéresse qu'aux deux derniers niveaux ; le niveau paquet est en effet seul traité par le commutateur de paquets 6. Aussi, l'installation 1 ne prend pas en compte le routage des paquets mais se borne uniquement à transmettre des paquets reçus des canaux $IT_p$ des lignes $2_1$ à $2_M$ ou reçus des lignes $4_1$ à $4_p$ au commutateur de paquets 6, et inversement.

En outre, l'installation 1 qui permet d'établir une liaison « physique » entre un E.T.D. d'abonné 22 (ou du dispositif d'adaptation aux réseaux extérieurs 7) et un E.T.D. du commutateur 6 seulement pendant le temps de transmission du paquet de données, est transparente aux données qu'elle commute.

Le niveau trame est géré à chaque extrémité d'une liaison par l'E.T.D. qui est par exemple un E.T.D. $22_1$ à $22_M$ pour une ligne $2_1$ à $2_M$, un E.T.D. (non représenté) du dispositif d'adaptation 7 pour une ligne $4_1$ à $4_p$ ou un E.T.D. du commutateur de paquets 6 pour une ligne $5_1$ à $5_Q$.

Selon la terminologie normalisée par l'avis X 25 du C.C.I.T.T., on appellera désormais par « trame » (ci-dessus désignée par paquet) toute suite d'éléments binaires d'informations qui est transmise entre deux octets particuliers appelés « fanions » F par un E.T.D. vers un autre E.T.D. à travers l'installation 1. Cette suite comprend au minimum quatre octets, soit 32 bits. Dans ce cas, elle ne concerne que le niveau trame et ne contient pas de paquets. Elle peut comprendre au maximum 68 octets soit 544 bits et contient alors un paquet de données de 68-4 = 64 octets. Un E.T.D. ignore toute trame dont le nombre d'octets est inférieur à 4 ou supérieur à 68. Ainsi, l'installation 1 n'assure que la commutation de trames dont elle ignore le contenu.

Entre deux trames transmises successivement, des fanions F ou drapeaux (du terme américain « flag ») sont interposés. Chaque fanion F est composé par l'octet suivant F = 0 1 1 1 1 1 1 0.

Selon une caractéristique propre à l'invention, qui sera explicitée plus loin, chaque trame est précédée de deux fanions et suivie de deux fanions.

Pour assurer une détection correcte du début et de la fin d'une trame, il est nécessaire que la trame ne contienne pas de fanions F. Pour ce faire, en émission, un E.T.D. insert un bit « 0 » après cinq bits consécutifs « 1 » dans la trame et, en réception, remplace tout bit « 0 » par un bit « 1 » après cinq bits consécutifs « 1 ».

On rappelle que la transmission d'une trame dite de commande TC par la partie émission d'un E.T.D. d'abonné 22, du dispositif d'adaptation 7 ou du commutateur 6 nécessite, selon l'autre direction de transmission, l'émission d'une trame dit de réponse par la partie émission de l'autre E.T.D. qui a détecté une trame correspondant à une trame de commande (trame d'information, de signalisation telle que mise en mode de réponse asynchrone ou déconnexion de la liaison établie). La trame de réponse TR peut être, par exemple, le signal « prêt à recevoir » RR, suite à la détection d'une trame de commande, ou un signal « non prêt à recevoir » RNR, correspondant à un traitement de la trame de commande ultérieur, ou bien encore un signal « demande de retransmission » REJ, suite à une détection d'erreurs dans le séquencement des trames reçues. En conséquence, tout échange d'information entre deux E.T.D. d'abonné (ou du dispositif d'adaptation 7) et du commutateur de paquets 6 donne lieu à une première émission d'une trame dite de commande TC du premier vers le second E.T.D. puis, après détection et réception complète de ladite trame dans le second E.T.D., à la vérification de bon séquencement de cette trame suivie de l'émission d'une trame dite de réponse TR par le second E.T.D. vers le premier E.T.D. Bien entendu, le début de l'émission d'une trame de réponse par le second E.T.D. peut s'effectuer au cours de la réception d'une seconde trame de commande, auquel cas la liaison établie par l'installation de commutation relative au premier échange sera conservé pour le second échange.

L'installation de commutation 1 instaure une liaison entre un E.T.D. d'abonné 22 et le commutateur de paquets 6 en réponse à la détection d'un fanion d'ouverture d'une trame de commande TC par l'E.T.D. d'abonné 22 et déconnecte cette liaison sur ordre du commutateur 6, à travers un bus 60, dès que le commutateur a terminé l'émission de la trame de réponse TR. Selon l'autre cas d'échange, le commutateur 6 donne l'ordre, à travers le bus 60, à l'installation 1 d'établir une liaison disponible pour transmettre une trame de commande TC du commutateur 6 vers un E.T.D. d'abonné 22 et donne également l'ordre, comme selon le premier échange, de déconnecter cette liaison dès que le commutateur 6 a détecté et reçu une trame de réponse TR.

Les organes de l'installation 1 spécifiques à l'invention sont principalement les parties d'émission et de réception d'équipements individuels d'abonnés (E.I.A.), $10_1$ à $10_M$ et $11_1$ à $11_M$, qui sont reliées aux lignes d'abonnés $2_1$ à $2_M$, les parties d'émission et de réception d'équipements individuels en mode-circuit (E.I.C.), $12_1$ à $12_N$ et $13_1$ à $13_N$, qui sont reliées aux secondes lignes en mode-circuit à 64 kbit/s $3_1$ à $3_M$ desservant le dispositif d'adaptation aux réseaux extérieurs 7, les parties d'émission et de réception d'équipements individuels pour paquets (E.I.P.), $14_1$ à $14_P$ et $15_1$ à $15_P$, qui sont reliées aux troisièmes lignes en mode-paquet à 64 kbit/s $4_1$ à $4_P$ transitant les trames entre l'installation 1 et le dispositif d'adaptation aux réseaux extérieurs 7, les parties d'émission et de réception d'équipements individuels pour paquets E.I.P.C. $16_1$ à $16_Q$ et $17_1$ à $17_Q$, qui sont reliées aux quatrièmes lignes en mode-paquet à 64 kbit/s $5_1$ à $5_Q$ transitant les trames entre l'installation 1 et le commutateur de paquets 6, un multiplexeur 180 et un démultiplexeur 181. En outre, l'installation de commutation à division du temps 1 conforme à l'invention comporte un réseau de commutation 19 du genre connu, concernant la commutation de simples lignes à 64 kbit/s. Le réseau de commutation 19 comprend un multiplexeur 191 qui multiplexe les voies numériques $1\,800_1$ à $1\,800_R$ sortantes du multiplexeur 180, un démultiplexeur 192 effectuant l'opération inverse et transmettant des voies numériques $1\,810_1$ à $1\,810_R$ dans le démultiplexeur 181, une mémoire tampon 193 et une mémoire de commande 194. La mémoire de commande 194 reçoit les ordres d'établissement ou de libération de connexion délivrés par une unité de marquage 183 à travers une liaison bidirectionnelle 182.

Les lignes entrantes 2, 3, 4 et 5 respectivement à 128 kbit/s et 64 kbit/s sont multiplexées dans le multiplexeur 180 en un certain nombre de voies numériques à débit supérieur $1\,800_1$ à $1\,800_R$. Les voies numériques $1\,810_1$ à $1\,810_R$ sortantes du réseau de commutation 19, à même débit que celui des voies numériques $1\,800_1$ à $1\,800_R$, sont démultiplexées dans le démultiplexeur 181 en des lignes sortantes 2, 3, 4 et 5.

Par exemple, l'installation est raccordée à M = 110 lignes d'abonné $2_1$ à $2_110$, à N = 22 lignes à 64 kbit/s $3_1$ à $3_22$, à P = 6 lignes à 64 kbit/s $4_1$ à $4_6$ et à Q = 8 lignes à 64 kbit/s $5_1$ à $5_8$. Le Multiplexeur 180 multiplexe par conséquent 2 M + N + P = 256 voies numériques à 64 kbit/s transmises par les parties de réception des équipements individuels 10, 12, 14 et 16. Il comprend R = 8 modules de multiplexage qui multiplexent chacun 32 voies à 64 kbit/s en une voie numérique 1 800 à 2 048 kbit/s. Le multiplexage s'effectue dans chaque module du multiplexeur 180 par tranche de 8 bits consécutifs délivrés par chaque voie entrante à 64 kbit/s. L'octet ainsi constitué est transmis en série dans un intervalle de temps de 3,9 µs sur la voie numérique à 2 048 kbit/s. Ainsi R = 8 voies numériques $1\,800_1$ à $1\,800_8$ sortantes du multiplexeur 180 sont reliées au réseau de commutation 19.

Le principe de fonctionnement du réseau de commutation 19 est connu dans l'art antérieur. Une réalisation particulièrement économique a été décrite dans la demande de brevet français 79-14062 déposé le 31 mai 1979 (FR-A-245198, publiée le 26.12.80) et intitulée « Réseau de commutation multiplex à division du temps permettant l'établissement de communications bidirectionnelles, unidirectionnelles et de diffusion ».

Une réalisation classique, moins optimisée, est illustrée à la Fig. 1. Un convertisseur série-parallèle et un multiplexeur indiqué en 191 effectuent une mise en parallèle sur 8 fils des octets délivrés en série sur les voies numériques $1\,800_1$ à $1\,800_R$ et un multiplexage de ces octets parallèles sur un supermultiplex 195 à 8 fils convoyant chacun un débit numérique égal à 2 048 kbit/s. La mémoire tampon 193 comprend, selon l'exemple choisi 32 × R = 256 mots à 8 bits. La mémoire de commande 194 comprend également 256 mots à 8 bits. Sur la Fig. 1, on a désigné par 192 un convertisseur parallèle-série effectuant une mise en série des octets issus du supermultiplexeur 196 à 8 fils sortants de la mémoire tampon 193 et un démultiplexeur qui démultiplexe les octets sortants en R = 8 voies numériques $1\,810_1$ à $1\,810_R$.

Les voies numériques sortantes $1\,810_1$ à $1\,810_R$ du réseau de commutation numérique 19 sont reliées au démultiplexeur 181. Ce dernier comprend R = 8 modules de démultiplexage qui démultiplexent chacun une voie numérique sortante 1 810 en 32 voies à 64 kbit/s reliés aux parties d'émission des équipements individuels 11, 13, 15 et 17.

Conformément à l'invention Q est toujours très inférieur à M + P, car la demande de liaison à chaque émission de trame pour une ligne d'abonné est très faible. Par suite, il y a expansion des trames de 5 vers 2 et 4 et compression de 2 et 4 vers 5.

La mémoire de commande 194 du réseau de commutation 19 est mise à jour par l'unité de marquage 183 de l'installation 1. L'unité 183 reçoit de chaque partie de réception 10, 12, 14, 16 l'information transmise et l'adresse de la ligne correspondante à travers le bus 184. Elle transmet à la mémoire de commande 194 sur la liaison 182, des signaux de commande en écriture permettant d'écrire à une adresse de la mémoire de commande 194 identifiant une ligne sortante 3, 4, 5 ou à un canal sortant ($IT_p$ ou $IT_c$) d'une ligne sortante 2, une information correspondant à une adresse d'une ligne entrante 3, 4, 5 ou un canal entrant ($IT_p$ ou $IT_c$) d'une ligne entrante 2.

Suite à cette écriture réalisée par l'unité de marquage 183 dans la mémoire de commande 194, appelée aussi « marquage de connexion », la mémoire de commande 194 fournit périodiquement, toutes les 125 µs, à la mémoire tampon 193 l'adresse correspondant à une ligne entrante, et ceci à un instant périodique correspondant à une ligne sortante. La mémoire tampon 193 fournit ainsi périodiquement l'octet d'information préalablement inscrit à l'adresse indiquée par la mémoire de commande. Ce transfert d'information s'effectue cycliquement toutes les 125 µs pour chaque octet à transmettre.

Selon une caractéristique connue de l'art antérieur, les supermultiplex à 8 fils 195 et 196 disposent de 256 intervalles de temps qui correspondent aux 256 lignes et sont répartis, selon l'exemple précité, en 220 canaux sur les lignes 2, c'est-à-dire 110 canaux $IT_c$ et 110 canaux $IT_p$, en N = 22 lignes $3_1$ à $3_22$, en P = 6 lignes $4_1$ à $4_6$ et en Q = 8 lignes $5_1$ à $5_Q$.

Ainsi, selon une caractéristique propre à l'invention, le même réseau de commutation 19 permet selon les besoins d'établir des connexions entre des canaux $IT_c$ des lignes 2, des connexions entre un canal $IT_c$ d'une ligne 2 et une ligne 3 en ce qui concerne les connexions acheminant la parole mais aussi d'établir des connexions entre un canal $IT_p$ d'une ligne 2 et une ligne 5 et des connexions entre une ligne 4 et une ligne 5, en ce qui concerne les connexions acheminant les trames de données (ou paquets).

L'unité de marquage 183 connaît l'état d'occupation ou non des lignes $5_1$ à $5_Q$, soit par une mémoire interne spéciale qu'elle met à jour lors des établissements de connexions ou des libérations de connexions soit en effectuant une lecture de la mémoire de commande 194 par l'intermédiaire de la liaison bi-directionnelle 182. Ainsi, lorsque l'ouverture d'une trame, indiquée par l'absence de fanions, est détectée sur le canal $IT_p$ d'une ligne 2 par la partie de réception 10 d'un E.I.A. ou sur une ligne 4 par la partie de réception 14 d'un E.I.P., l'unité de marquage 183 en est avertie par le bus 184 sur lequel la partie de réception 10 de l'E.I.A. ou celle 14 de l'E.I.P. indique la ligne concernée. L'unité de marquage recherche une ligne libre 5. Si une ligne 5 est disponible, l'unité 183 ordonne le marquage dans la mémoire de commande, ce qui établit une connexion entre la ligne 2 ou 4, sur laquelle une émission de trame a commencé, et la ligne 5 disponible sélectionnée.

L'unité de marquage 183 peut également recevoir, à travers une liaison 81, des demandes de connexion délivrées par une unité de commande 8 de l'installation, lorsqu'il s'agit d'établir des connexions entre deux canaux $IT_c$ de lignes 2 ou entre un canal $IT_c$ d'une ligne 2 et une ligne 3. Enfin, l'unité de marquage 183 peut recevoir des demandes de connexion par la liaison 60 provenant du commutateur de paquets 6 lorsqu'il s'agit d'établir des connexions entre une ligne 5 et une ligne 4 ou un canal $IT_p$ d'une ligne 2.

Chacune de ces demandes de connexions par le commutateur de paquets 6 précède l'émission d'une trame par ce dernier sur une ligne 5.

Une base de temps 9 fournit l'ensemble des signaux d'horloge nécessaire au bon fonctionnement de l'installation 1.

Les différents types de commutation seront détaillés au fur et à mesure des descriptions d'un E.I.A. et d'un E.I.P.

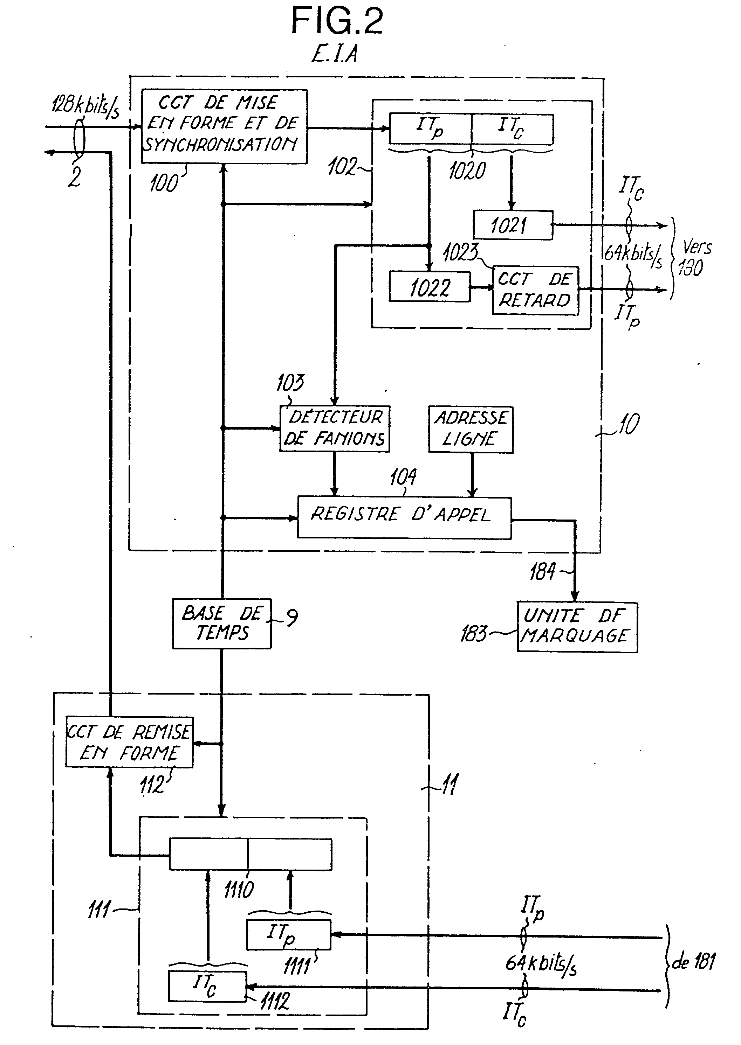

Un équipement individuel d'abonné E.I.A. est représenté à la Fig. 2. Sa partie de réception 10 comprend un circuit de mise en forme binaire et de synchronisation 100 des signaux $IT_p$ et $IT_c$ délivrés par la ligne correspondante 2, un démultiplexeur 102 des deux canaux $IT_p$ et $IT_c$, un détecteur de fanions 103 et un registre d'appel 104. La partie d'émission 11 comprend un multiplexeur 111 et un circuit de remise en forme 112.

Le circuit de mise en forme et de synchronisation 100 remet en code binaire le signal reçu en ligne et assure la synchronisation des bits reçus au moyen des signaux d'horloge délivrés par la base de temps 9. A l'inverse, le circuit de remise en forme 112 assure la synchronisation en émission des bits à émettre au moyen des signaux d'horloge délivrés par la base de temps 9 et transforme le signal traité en code binaire dans l'installation 1 en un signal en code de ligne. La base de temps 9 transmet notamment les signaux d'horloge à 128 kHz et 8 kHz au démultiplexeur 102 et au multiplexeur 111.

Le démultiplexeur 102 est composé d'un registre à décalage 1 020 à 16 étages binaires qui sont commandés en écriture à la fréquence de 128 kHz. Ce registre joue le rôle de convertisseur série-parallèle et est lu à la fréquence de 8 kHz. Le contenu de ses huit derniers étages transmet un octet du canal en mode-circuit $IT_c$ vers un registre tampon 1 021.

Conjointement au transfert précédent, les huit premiers étages du registre 1 020 sont écrits dans un second registre tampon 1 022 et délivrés au détecteur de fanions 103. Ce détecteur compare à chaque mot reçu à un mot préalablement mémorisé F = 0 1 1 1 1 1 1 0. A la suite d'une série continue de fanions, dès que le détecteur 103 détecte l'absence d'un fanion, c'est-à-dire le début d'une trame de commande TC, il délivre un signal d'autorisation d'émission au registre d'appel 104. Ce dernier synchronisé par la base de temps 9 fournit une demande de commutation sur le bus 184 destinée à l'unité de marquage 183, en indiquant l'adresse de la ligne 2. Cette unité 183 recherche une ligne libre parmi les Q lignes $5_1$ à $5_Q$. Pour ce faire, elle examine soit le contenu d'une mémoire des états « libres » ou « occupés » des lignes $5_1$ à $5_Q$ qui lui est propre, soit le contenu de la mémoire de commande 194 en effectuant une lecture par la liaison 182. Si aucune ligne 5 n'est libre, l'unité 183 ne connecte pas la ligne 2 à une ligne 5, ce qui n'est pas très gênant puisque l'E.T.D. considéré 22 ayant émis une trame, peut procéder une dizaine de fois à sa réémission jusqu'à ce qu'il reçoive une trame de réponse TR délivré par le commutateur de paquets 6. Dans le cas contraire, l'unité 183 envoie un ordre de marquage double à la mémoire de commande 194 de manière à établir dans le réseau de commutation 19 une connexion bidirectionnelle entre la ligne 2 et la ligne sélectionnée 5 (2 vers 5 et 5 vers 2).

Une liaison bidirectionnelle est ainsi établie par le réseau de commutation 19 dans l'installation 1 entre l'E.I.A. 10-11 délivrant une trame et l'E.I.P.C. 16-17 la retransmettant au commutateur de paquets 6.

On notera que, après l'émission de la première trame TC, l'E.T.D. 22 peut émettre d'autres trames de sorte que chaque trame soit détectée par l'E.T.D. connecté correspondant du commutateur de paquets 6, avant que l'émission d'une trame de réponse TR soit terminée. Le signal émis par le détecteur de fanions 103 qui succède à l'absence de fanions et qui correspond à une autre trame de commande ou réponse émise par l'E.T.D. d'abonné sur la ligne 2, reste sans effet dans l'unité 183 puisque la connexion a déjà été établie pour transmettre une trame de commande TC.

Une fois l'échange ou les échanges de trames terminés, le commutateur de paquets 6 donne l'ordre à l'unité de marquage 183 de déconnecter les lignes 2 et 5, via le bus 60. Cet ordre succède à la détection d'une TR émis par l'E.T.D. 22 ou à l'émission d'une TR par le commutateur 6. L'unité 183 transmet un ordre à la mémoire de commande 194 pour effacer les adresses correspondant à la liaison précédemment établie. Cet ordre d'effacement consiste, en fait, à effectuer dans le réseau de commutation 19 des connexions unidirectionnelles entre les voies sortantes des lignes 2 ($IT_p$) et 5 précédemment connectées, et une ligne particulière 3 émettant en permanence vers le système 1 un code particulier identique au code fanion 0 1 1 1 1 1 1 0. Ainsi, après chaque déconnexion ou, plus généralement, pour des canaux $IT_p$ et des lignes 4 et 5 non connectées, le réseau de commutation 19 transmet en permanence des fanions à partir d'une ligne entrante particulière 3 vers les lignes sortantes 4, 5 et les canaux sortants $IT_p$ des lignes sortantes 2 de l'installation 1.

Toutefois, au moment de la déconnexion qui a lieu seulement lorsque la trame a été entièrement reçue par l'E.T.D. récepteur, donc suivie de fanions émis par l'E.T.D. émetteur, ces derniers ne sont pas obligatoirement cadrés en octet avec la base de temps 9 synchronisant le réseau de commutation 19, suite à l'insertion d'un ou de plusieurs bits « 0 » dans le contenu de chaque trame émise. Il s'ensuit que l'E.T.D. récepteur détecte après réception d'une trame une discontinuité dans la réception des fanions. Comme cette discontinuité est inférieure à 8 bits, l'E.T.D. ignore cette discontinuité puisqu'elle est très inférieure à une trame valide qui doit contenir au moins 4 octets, soit 32 bits.

Dans la mesure où l'E.T.D. 22 de l'abonné ou l'E.T.D. du dispositif d'adaptation 7 émet des bits sans synchronisme avec la base de temps 9, l'E.T.D. récepteur du commutateur 6 observe une discontinuité dans la réception des fanions lors de l'établissement de la connexion par le réseau de commutation 19. Il est nécessaire que cette discontinuité se produise au moins 2 octets avant l'ouverture de la trame. C'est la raison pour laquelle la détection de fanions dans l'E.I.A. doit s'effectuer au moins 2 octets avant la transmission du premier octet de trame vers le réseau de commutation 19. Ceci est réalisé selon l'invention par un circuit de retard 1 023 relié en série à la sortie du registre tampon 1 022 du démultiplexeur 102 dans la partie de réception 10 de l'E.I.A. Ce circuit de retard 1 023 est constitué par un simple registre à décalage à 16 étages binaires.

Comme on le voit sur la Fig. 2, le multiplexeur 111 comporte deux registres tampons 1 111 et 1 112, qui reçoivent en parallèle les canaux $IT_p$ et $IT_c$ à 64 kbit/s du démultiplexeur 181, et un registre à décalage 1 110 retransmettant les canaux multiplexés $IT_c$ et $IT_p$ vers la ligne 2 à travers le circuit de remise en forme 112. Le multiplexeur 111 réalise la fonction inverse du démultiplexeur 102.

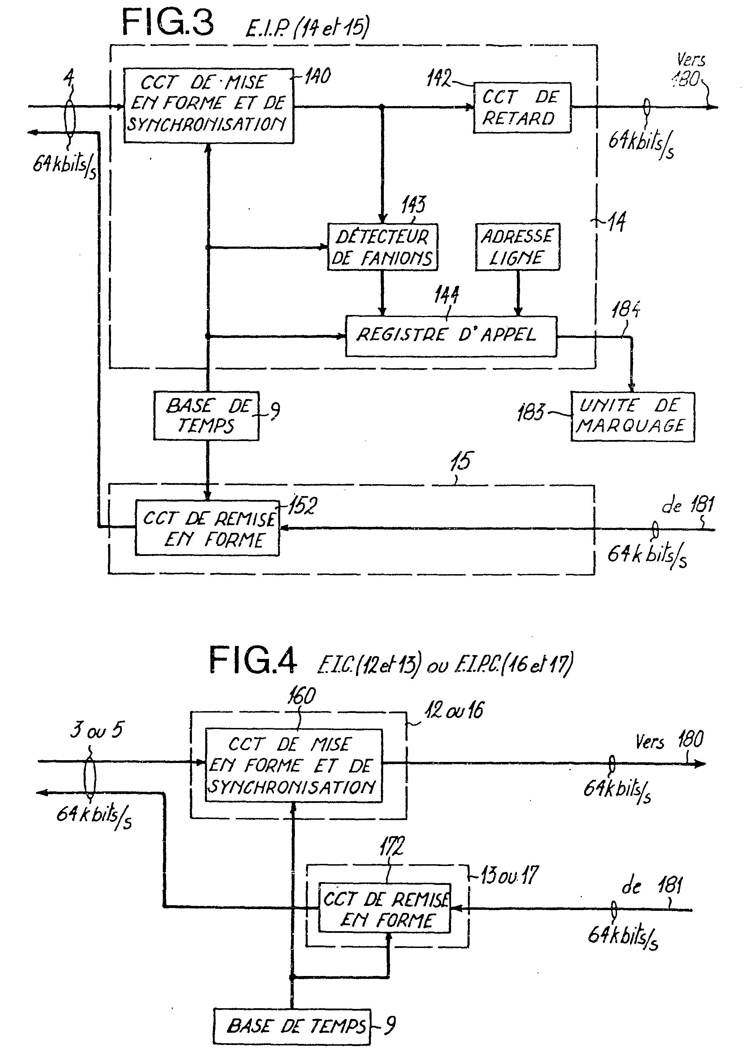

La Fig. 3 montre un équipement individuel pour paquets E.I.P. Il joue vis-à-vis du commutateur de paquets 6 un rôle semblable à un E.I.A. Cependant, sa structure est plus simple du fait qu'il n'y a pas de multiplexage et démultiplexage de canaux composants. Ainsi, par comparaison avec la Fig. 2, on retrouve dans la partie de réception 14, un circuit de mise en forme et de synchronisation 140, un circuit de retard 142, un détecteur de fanions 143 et un registre d'appel 144. La sortie du circuit 140 est directement reliée aux entrées numériques du circuit de retard 142 et du détecteur 143. A l'exception de cette dernière connexion, toutes les autres sont respectivement identiques à celles décrites pour la partie de réception 10 de la Fig. 2.

Le circuit de mise en forme et de synchronisation 140 reçoit les trames et fanions transmis par l'E.T.D. correspondant du dispositif d'adaptation 7, via une ligne 4. Le signal d'horloge à 64 kHz est fourni par la base de temps 9. Le détecteur de fanions 143 fonctionne selon le même principe que celui 103 montré à la Fig. 2. Dès qu'il a détecté l'absence de fanion, il émet un signal d'autorisation d'émission vers le registre d'appel 144 qui, synchronisé par la base de temps 9, émet une demande de commutation sur le bus 184 destinée à l'unité de marquage 183 en indiquant l'adresse de la ligne 4.

Le circuit 142 est identique au registre 1 023 (Fig. 2) et permet de retarder de 16 bits la trame reçue avant de l'envoyer vers le multiplexeur 180, afin que la connexion de la ligne 4 et d'une ligne libre 5 soit établie par le réseau de commutation 19, tandis que la partie de réception 14 émet encore des fanions précédant la trame qui vient d'être détectée.

La partie d'émission 15 est très simplifié par rapport à la partie d'émission 11 (Fig. 2). Il ne comporte qu'un circuit de mise en forme 152, synchronisé par la base de temps 9.

La Figure 4 montre un équipement individuel pour paquets E.I.P.C. relié par une ligne 5 au commutateur de paquets 6. La partie de réception 16 de cet E.I.P.C. ne comprend qu'un circuit de mise en forme et de synchronisation 160 et sa partie d'émission 17 un circuit de remise en forme 172. Cet équipement est identique à un E.I.C. relié par une ligne 3 au dispositif d'adaptation aux réseaux extérieurs 7.

En effet, comme déjà dit, le commutateur de paquets 6, avant toute émission de trame sur une ligne 5, demande à l'unité de marquage 183, à travers le bus 60, d'effectuer une connexion exécutée par le réseau de commutation 19 entre cette ligne 5 et une ligne destinataire 4 ou un canal destinataire $IT_p$ sur une ligne 2. Un E.I.P.C. relié au commutateur de paquets 6 n'a pas besoin de détecter l'absence de fanion puisque la connexion sera établie au préalable. Après la fin des échanges de trames, une déconnexion est demandée par le commutateur 6 à l'unité de marquage 183 sur le bus 60. L'unité 183 donne l'ordre de déconnexion au réseau de commutation 19 qui réalise ainsi une connexion des lignes sortantes avec une ligne 3 émettant en permanence le code fanion 0 1 1 1 1 1 1 0, comme décrit précédemment.

La déconnexion peut provoquer une discontinuité dans la transmission des fanions reçus par la partie réception des deux E.T.D. précédemment reliés l'un à l'autre par l'installation 1. Cette discontinuité est ignorée par les deux E.T.D. puisqu'elle se traduit par une trame inférieure à un octet et que toute trame inférieure à 4 octets est systématiquement ignorée par les deux E.T.D.

Ainsi, par des équipements individuels spécifiques très simples ajoutés à un réseau de commutation numérique, l'installation 1 selon l'invention permet de concentrer des données émises en mode-paquet à partir de terminaux d'abonnés dispersés vers un commutateur de paquets multiprocesseurs qui se voit « virtuellement » connecté en permanence à chacun d'eux mais qui ne l'est réellement que pendant les temps de transmission de données utiles.

## Revendications

1. Installation de commutation numérique à division du temps (1) pour des lignes véhiculant la parole et des paquets de données, commutation, d'une part, entre des premiers canaux numériques en mode-circuit MIC ($IT_c$), qui sont chacun multiplexés avec un second canal numérique en mode-paquet ($IT_p$) dans une première ligne (2) bidirectionnelle à un premier débit prédéterminé, et des secondes lignes (3) numériques bidirectionnelles en mode-circuit MIC et, d'autre part, entre lesdits seconds canaux et des troisièmes (4) et quatrièmes (5) lignes numériques bidirectionnelles en mode-paquet lesdits canaux et lesdites secondes, troisièmes et quatrièmes lignes ayant un second débit moitié du premier débit, ladite installation comprenant des premiers moyens (10) pour démultiplexer lesdites premières lignes numériques en des premiers et seconds canaux numériques entrants ($IT_c$, $IT_p$), et des premiers moyens (11) pour multiplexer les premiers et seconds canaux sortants ($IT_c$, $IT_p$) en lesdites premières lignes numériques (2), ladite installation étant caractérisée en ce qu'elle comprend :

— des seconds moyens (180, 191) pour multiplexer lesdits premiers et seconds canaux entrants ($IT_c$, $IT_p$) et les secondes, troisièmes et quatrièmes lignes entrantes (3, 4, 5) en un multiplex numérique (195) ayant un troisième débit prédéterminé ;

— des moyens (183, 193, 194) recevant ledit multiplex pour commuter bidirectionnellement le premier canal ($IT_c$) de chaque première ligne (2) au premier canal ($IT_c$) d'une première ligne ou à une seconde ligne (3), le second canal ($IT_p$) de chaque première ligne (2) à une quatrième ligne (5) et chaque troisième ligne (4) à une quatrième ligne (5) ; et

— des seconds moyens (192, 181) pour démultiplexer le multiplex numérique à un troisième débit (196), résultant des commutations dans lesdits moyens de commutation, en les premiers et seconds canaux sortants ($IT_c$, $IT_p$) et les secondes, troisièmes et quatrièmes lignes sortantes (3, 4, 5).

2. Installation conforme à la revendication 1, caractérisée en ce que les premiers moyens de démultiplexage (10) comprennent des moyens (103) pour détecter les fanions interposés entre deux paquets convoyés par le second canal ($IT_p$) de chaque première ligne (2) entrant dans les seconds moyens de multiplexage (180, 191) et des moyens (104) pour adresser lesdits moyens de commutation (183, 193, 194) afin de commuter bidirectionnellement ledit second canal avec une quatrième ligne en mode-paquet libre (5) en réponse à un signal d'absence de fanions par les moyens de détection de fanion (103).

3. Installation conforme à la revendication 1 ou 2, caractérisée en ce qu'elle comprend des moyens (143) pour détecter les fanions interposés entre deux paquets convoyés par chaque troisième ligne (4) entrant dans les seconds moyens de multiplexage (180, 191) et des moyens (144) pour adresser lesdits moyens de commutation (183, 193, 194) afin de commuter bidirectionnellement ladite troisième ligne avec une quatrième ligne en mode-paquet libre (5) en réponse à un signal d'absence de fanions délivré par les moyens précédents de détection de fanions (143).

4. Installation conforme à l'une des revendications 2 ou 3, caractérisée en ce qu'elle comprend des moyens (1 023, 142) reliés aux entrées correspondantes des seconds moyens de multiplexage (180, 191) pour retarder les paquets convoyés par les seconds canaux ($IT_p$) ou par les troisièmes lignes (4) d'une durée égale à au moins deux fanions.

5. Installation conforme à l'une des revendications 1 à 4, caractérisée en ce que les moyens de commutation comprennent des moyens (183, 194) pour établir ou rompre une liaison bidirectionnelle à partir d'une quatrième ligne (5) vers le second canal ($IT_p$) d'une première ligne (2) prédéterminée ou à partir d'une quatrième ligne (5) vers une troisième ligne (4) en réponse à un signal de connexion ou de déconnexion bidirectionnelle (60) contenant l'adresse de ladite première ou troisième ligne prédéterminée et émis par un commutateur de paquets (6) auquel sont reliées lesdites quatrièmes lignes (5).

6. Installation conforme à la revendication 5 caractérisée en ce que, après une déconnexion bidirectionnelle d'un second canal ($IT_p$) d'une première ligne (2), respectivement une troisième ligne (4), et d'une quatrième ligne (5), les moyens de commutation (183, 193, 194) relient unidirectionnellement ledit second canal sortant ($IT_p$), respectivement ladite troisième ligne sortante (4), et ladite quatrième ligne sortante (5) à une seconde ligne entrante prédéterminée (3) délivrant en permanence des fanions.

7. Installation conforme à l'une des revendications 1 à 6, dans laquelle les premières lignes (2) sont des lignes téléphoniques d'abonné, caractérisée en ce que les secondes lignes (3) sont des lignes numériques en mode-circuit MIC reliées à des moyens (7) d'adaptation à des réseaux de commutation externes à l'installation, les troisièmes lignes (4) sont des lignes en mode-paquet reliées aux moyens d'adaptation (7), et les quatrièmes lignes sont des lignes en mode-paquet reliées à un commutateur de paquets (6).

8. Installation conforme à l'une des revendications 1 à 7, caractérisée en ce que le nombre de premières et troisièmes lignes (2, 4) est supérieur au nombre de quatrièmes lignes en mode-paquet (5).

9. Installation conforme à l'une des revendications 1 à 8, caractérisée en ce que le nombre de premières lignes (2) est supérieur au nombre de secondes lignes (3).

10. Installation conforme à l'une des revendications 1 à 9, caractérisée en ce que le premier débit prédéterminé est égal à 128 kbit/s.

**Claims**

1. Time division digital switching system (1) for lines (2) conveying speech and data packets, switching, on the one hand, between first PCM circuit-mode digital channels ($IT_c$), each of which is multiplexed with a second packet-mode digital channel ($IT_p$) into a first bidirectional line (2) having a first predetermined rate, and second PCM bidirectional circuit-mode digital lines (3) and, on the other hand, between said second channels and third (4) and fourth (5) bidirectional packet-mode digital lines, said channels and said second, third and fourth lines having a second rate half the first rate, said system comprising first means (10) for multiplexing said first digital lines into the incoming first and second digital channels ($IT_c$, $IT_p$), and first means (11) for multiplexing the outgoing first and second channels ($IT_c$, $IT_p$) into said first digital lines (2), said system being characterized in that it comprises :
— second means (180, 191) for multiplexing said incoming first and second channels ($IT_c$, $IT_p$) and the incoming second, third and fourth lines (3, 4, 5) into a digital multiplex (195) having a third predetermined rate ;
— means (183, 193, 194) receiving said multiplex for bidirectionally switching said first channel ($IT_c$) of each first line (2) with the first channel ($IT_c$) of a first line or with a second line (3), the second channel ($IT_p$) of each first line (2) with a fourth line (5) and each third line (4) with a fourth line (5) ; and
— second means (192, 181) for demultiplexing the digital multiplex (196) having said third rate with results from the switching operations in said switching means, into the outgoing first and second channels ($IT_c$, $IT_p$) and the outgoing second, third and fourth lines (3, 4, 5).

2. System according to claim 1 characterized in that the first multiplexing means (10) comprises means (103) for detecting the flags interposed between two packets convoyed in the second channel ($IT_p$) of each first line (2) incoming in the second multiplexing means (180, 191) and means (104) for addressing said switching means (183, 193, 194) so as to bidirectionally switch said second channel with a free fourth packet-mode line (5) in response to a flag absence signal delivered from the flag detecting means (103).

3. System according to claim 1 or 2, characterized in that it comprises means (143) for detecting the flags interposed between two packets convoyed in each incoming third line (4) in the second multiplexing means (180, 191) and means (144) for addressing said switching means (183, 193, 194) so as to bidirectionally switch said third line with a free fourth packet-mode line (5) in response to a flag absence signal delivered from the foregoing flag detecting means (143).

4. System according to claim 2 or 3, characterized in that it comprises means (1 023, 142) connected to the corresponding inputs of the second multiplexing means (180, 191) for delaying the packets convoyed in said second channels ($IT_p$) or in the third lines (4) for a period equal to at least two flags.

5. System according to any one of claims 1 to 4, characterized in that the switching means comprises means (183, 194) for establishing or breaking a bidirectional link from a fourth line (5) to the second channel ($IT_p$) of a predetermined first line (2) or from a fourth line (5) to a third line (2) in response to a bidirectional connection or disconnection request signal (60) which contains the address of said predetermined first or third line and which is emitted by a packet switching exchange (6) to which said fourth lines (5) are connected.

6. System according to claim 5 characterized in that, after a bidirectional disconnection between a second channel ($IT_p$) of a first line (2), respectively a third line (4), and a fourth line (5), the switching means (183, 193, 194) unidirectionally links said outgoing second channel ($IT_p$), respectively said outgoing third line (4), and said outgoing fourth line (5) to a predetermined incoming second line (3) permanently delivering flags.

7. System according to any one of claims 1 to 6, in which said first lines (2) are subscriber telephone lines, characterized in that the second lines (3) are PCM circuit-mode digital lines connected to matching means (7) to switching networks outside the system, the third line (4) are packet-mode lines connected to said matching means (7) and said fourth lines are packet-mode lines connected to a packet switching exchange (6).

8. System according to any one of claims 1 to 7, characterized in that the number of the first and third lines (2, 4) is greater than the number of said fourth packet-mode lines (5).

9. System according to any one of claims 1 to 8, characterized in that the number of the first lines (2) is greater than the number of said second lines (3).

10. System according to any one of claims 1 to 9, characterized in that the predetermined first rate is equal to 128 kbit/s.

**Ansprüche**

1. Numerische Umschalteinrichtung auf Zeitteilerbasis (1) für Leitungen (2), welche das gesprochene Wort und Datenpakete übertragen, wobei die Umschaltung einerseits zwischen ersten numerischen Kanälen für die MIC-kodierte Wortübertragung ($IT_c$), von denen jeder mit einem zweiten numerischen Kanal für die Datenpaketübertragung ($IT_p$) in einer ersten Zweiwegleitung (2) mit einer ersten vorbestimmten Bitrate gemultiplext ist, und zweiten numerischen MIC-kodierten Zweiwegleitungen (3) erfolgt, und andererseits zwischen den zweiten Kanälen und dritten bzw. vierten Zweiwegleitungen (4) bzw. (5) für Datenpakete erfolgt, wobei die Kanäle sowie die zweiten, dritten und vierten Leitungen eine zweite Bitrate in Höhe der halben ersten Bitrate besitzen, und wobei die Umschalteinrichtung eine erste Demultiplexeinrichtung (10) für das Demultiplexen der ersten numerischen Leitungen in erste und zweite numerische Eingangskanäle ($IT_c$, $IT_p$) und eine erste Multiplexeinrichtung (11) für das Multiplexen der ersten und zweiten Ausgangskanäle ($IT_c$, $IT_p$) in die ersten numerischen Leitungen (2) aufweist und dadurch gekennzeichnet ist, daß sie umfaßt :
— zweite Multiplex-Einrichtungen (180, 191) für das Multiplexen der ersten und zweiten Eingangskanäle ($IT_c$, $IT_p$) und der zweiten, dritten und vierten Eingangsleitungen (3, 4, 5) in eine numerische Multiplexleitung (195) mit einer dritten vorbestimmten Bitrate ;
— die Multiplexleitung aufnehmende Schalteinrichtungen (183, 193, 194) für das bidirektionelle Umschalten des ersten Kanals ($IT_c$) jeder ersten Leitung (2) auf den ersten Kanal ($IT_c$) einer ersten Leitung oder auf eine zweite Leitung (3) sowie des zweiten Kanals ($IT_p$) jeder ersten Leitung (2) auf eine vierte Leitung (5), und jeder dritten Leitung (4) auf eine vierte Leitung (5) ;
— und zweite Demultiplexeinrichtungen (192, 181) für das Demultiplexen der numerischen Multiplexleitung mit einer dritten Bitrate (196), die sich aus den Umschaltungen in den Schalteinrichtungen ergibt, in die ersten und zweiten Ausgangskanäle ($IT_c$, $IT_p$) und die zweiten, dritten und vierten Ausgangsleitungen (3, 4, 5).

2. Einrichtung nach Anspruch 1, dadurch gekennzeichnet, daß die erste Demultiplexeinrichtung (10) eine Detektoreinrichtung (103) für die Markierungsbitgruppe (flags) zwischen zwei übertragenen Datenpaketen, die auf dem zweiten Kanal ($IT_p$) jeder ersten in die zweite Multiplexeinrichtungen (180, 191) führenden Leitung (2) übertragen werden, und eine Adressiereinrichtung (104) für die Schalteinrichtungen (183, 193, 194) umfaßt, um den zweiten Kanal auf eine freie vierte Leitung (5) für Datenpakete in Abhängigkeit von einem von der Detektoreinrichtung (103) gelieferten Signal, das die Abwesenheit von Markierungsbitgruppen anzeigt, bidirektionell zu schalten.

3. Einrichtung nach Anspruch 1 oder 2, dadurch gekennzeichnet, daß sie eine Detektoreinrichtung (143) für die Markierungsbitgruppen zwischen zwei Datenpaketen, die auf jeder dritten in die zweiten Multiplexeinrichtungen (180, 191) führenden Leitung (4) übertragen werden und eine Adressiereinrichtung (144) für die Schalteinrichtungen (183, 193, 194) umfaßt, um die dritte Leitung auf eine freie vierte Leitung (5) für Datenpakete in Abhängigkeit von einem von der vorhergehenden Detektoreinrichtung (143) gelieferten Signal, das die Abwesenheit von Markierungsbitgruppen anzeigt, bidirektionell zu schalten.

4. Einrichtung nach einem der Ansprüche 2 oder 3, dadurch gekennzeichnet, daß sie mit den entsprechenden Eingängen der zweiten Multiplexeinrichtung (180, 191) verbundene Verzögerungseinrichtungen (1 023, 142) umfaßt, um die von den zweiten Kanälen ($IT_p$) oder den dritten Leitungen (4) übertragenen Pakete um eine Zeitdauer zu verzögern, die gleich groß oder kleiner ist als zwei Markierungsbitgruppen.

5. Einrichtung nach einem der Ansprüche 1 bis 4, dadurch gekennzeichnet, daß die Schalteinrichtungen Einrichtungen (183, 194) umfassen, welche eine bidirektionelle Verbindung von einer vierten Leitung (5) zu dem zweiten Kanal (IT$_p$) einer vorbestimmten ersten Leitung (2) oder von einer vierten Leitung (5) zu einer dritten Leitung (4) herstellen oder unterbrechen in Abhängigkeit von einem Signal (60) für eine bidirektionelle Verbindung oder Trennung, das die Adresse der vorbestimmten ersten oder dritten Leitung enthält und von einem Paketumschalter (6) abgegeben wird, mit dem die vierten Leitungen (5) verbunden sind.

6. Einrichtung nach Anspruch 5, dadurch gekennzeichnet, daß nach dem bidirektionellen Trennen eines zweiten Kanals (IT$_p$) einer ersten Leitung (2) bzw. einer dritten Leitung (4) und einer vierten Leitung (5) die Schalteinrichtungen (183, 193, 194) den zweiten Ausgangskanal (IT$_p$) bzw. die dritte Ausgangsleitung (4) und die vierte Ausgangsleitung (5) in einer Richtung mit einer vorbestimmten zweiten Eingangsleitung (3) verbinden, die ständig Markierungsbitgruppen abgibt.

7. Einrichtung nach einem der Ansprüche 1 bis 6, in welcher die ersten Leitungen (2) Fernsprechteilnehmerleitungen sind, dadurch gekennzeichnet, daß die zweiten Leitungen (3) numerische Leitungen für MIC-kodierte Wortübertragung sind, die mit einer Adaptereinrichtung (7) für das Anpassen an Durchschaltnetzwerke außerhalb der Umschalteinrichtung verbunden sind, daß die dritten Leitungen (4) mit der Adaptereinrichtung (7) verbundene Datenpaketleitungen sind, und die vierten Leitungen mit einem Paketumschalter (6) verbundene Datenpaketleitungen sind.

8. Einrichtung nach einem der Ansprüche 1 bis 7, dadurch gekennzeichnet, daß die Zahl der ersten und dritten Leitungen (2, 4) größer ist als die Zahl der vierten Leitungen (5) für Datenpakete.

9. Einrichtung nach einem der Ansprüche 1 bis 8, dadurch gekennzeichnet, daß die Zahl der ersten Leitungen (2) größer ist als die Zahl der zweiten Leitungen (3).

10. Einrichtung nach einem der Ansprüche 1 bis 9, dadurch gekennzeichnet, daß die erste vorbestimmte Bitrate 128 kbit/s beträgt.

FIG.1

0 034 514

# FIG.2

E.I.A

# FIG.3  E.I.P. (14 et 15)

**140** — CCT DE MISE EN FORME ET DE SYNCHRONISATION

**142** — CCT DE RETARD

Vers 180

64 kbits/s

4

64 kbits/s

**143** — DÉTECTEUR DE FANIONS

ADRESSE LIGNE

~14

**144** — REGISTRE D'APPEL

**184**

BASE DE TEMPS — 9

**183** — UNITÉ DE MARQUAGE

**15**

**152** — CCT DE REMISE EN FORME

de 181

64 k bits/s

# FIG.4  E.I.C. (12 et 13) ou E.I.P.C. (16 et 17)

**160** — CCT DE MISE EN FORME ET DE SYNCHRONISATION

12 ou 16

3 ou 5

Vers 180

64 kbits/s

64 kbits/s

**172** — CCT DE REMISE EN FORME

~13 ou 17

de 181

64 kbits/s

BASE DE TEMPS — 9

3